# EUROPÄISCHE PATENTSCHRIFT

(11) **EP 0 377 189 B1**
(45) Veröffentlichungstag und Bekanntmachung des Hinweises auf die Patenterteilung: **07.09.1994**
(21) Anmeldenummer: 89123875.0
(22) Anmeldetag: 23.12.1989
(51) Int. Cl.: C09B 62/245

(54) **Reaktivfarbstoffe**
Reactive dyes
Colorants réactifs

(30) Priorität: 05.01.1989 DE 3900182
(43) Veröffentlichungstag der Anmeldung: 11.07.1990
(73) Patentinhaber: BAYER AG, 51368 Leverkusen (DE)
(72) Erfinder: Schündehütte, Karl Heinz, Prof.-Dr., D-5090 Leverkusen 3 (DE); Stöhr, Frank-Michael, Dr., D-5068 Odenthal-Osenau (DE)

(56) Entgegenhaltungen:
- EP-A- 0 148 496
- CH-A- 510 728
- DE-A- 2 920 949
- GB-A- 1 263 003

## Beschreibung

Gegenstand der vorliegenden Erfindung sind Reaktivfarbstoffe der Formel 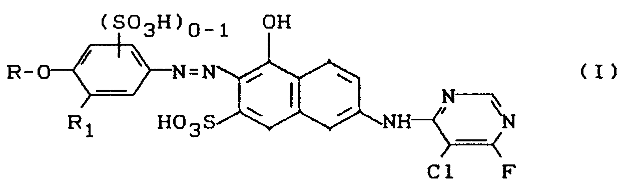
und deren Salze, inbesondere deren Alkali- oder Ammoniumsalze. Bevorzugt sind dabei Li-Salze, insbesondere bei Farbstoffen mit 2 Sulfogruppen.
- R =: gegebenenfalls substituiertes C₁-C₅-Alkyl, Cyclohexyl oder Aryl, insbesondere gegebenenfalls substituiertes Phenyl,
- R₁ =: H oder Sulfo, Halogen(Cl, Br), C₁-C₄-Alkyl.

Die Formel (I) gibt die sulfogruppenhaltigen Farbstoffe in Form der freien Säuren wieder.

In CH-A-510 728 werden bereits strukturell ähnliche Farbstoffe angegeben, die sich aber durch eine weitere Sulfogruppe am Naphthalingerüst unterscheiden. Farbstoffe mit gleichem Chromopher oder anderen Reaktivhaken sind bekannt aus GB-A-1263 003 und DE-A-2930 949.

Die Herstellung der Farbstoffe I erfolgt beispielsweise nach folgenden Verfahren:
1. Durch Kondensation einer Reaktivkomponente der allgemeinen Formel 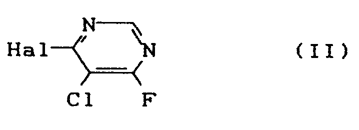 in der
   Hal für Chlor oder Fluor steht,
   mit einem Aminoazofarbstoff der allgemeinen Formel 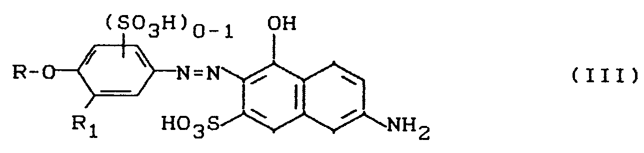 in der
   R und R₁ die angegebene Bedeutung haben;
2. durch Azokupplung eines Kondensationsproduktes der Formel 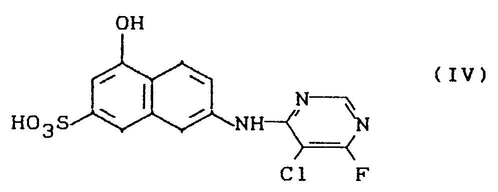 mit Diazoniumverbindungen, die auf üblichem Wege aus den Aminen der allgemeinen Formel (V) erhalten werden 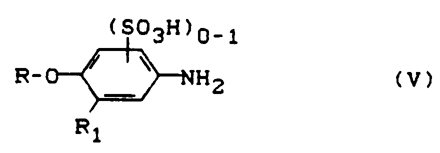 wobei
   R und R₁ die angegebene Bedeutung haben.

Reaktivkomponenten der allgemeinen Formel (II), z.B. 4,6-Difluor-5-chlorpyrimidin oder 4,5-Dichlor-6-fluorpyrimidin sind bekannt und beispielsweise aus 4,5,6-Trichlorpyrimidin durch Fluoridaustausch mit HF oder Alkalifluoriden in aprotischen Lösungsmitteln zu erhalten.

Die Kondensation mit Aminoazofarbstoffen der Formel (II) wird bevorzugt in wäßriger Lösung oder Suspension im pH-Bereich von 4-7 ausgeführt. Der freiwerdende Halogenwasserstoff wird durch Zugabe von wäßrigem Alkali, insbesondere Lithiumhydroxid, -carbonat oder -bicarbonat abgestumpft.

Die Aminoazofarbstoffe der allgemeinen Formel (III) können auf üblichen Wegen duch Azokupplung von Diazoniumverbindungen aus den Aminen der allgemeinen Formel (V) mit Verbindungen der Formel (VI) erhalten werden, wobei die Bedingungen so gewählt werden, daß die Kupplung in o-Stellung zur OH-Gruppe des I-Säure-Derivates erfolgt. 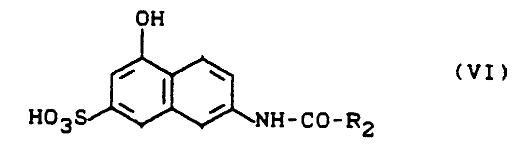
R₂ steht für einen gegebenenfalls substituierten aliphatischen oder aromatischen Rest.

Der Acylrest -CO₂R wird im Anschluß an die Kupplung durch Erwärmen in saurem oder alkalischem Medium abgespalten.

Als Acylrest kommen insbesondere Formyl, Acetyl, Maleonyl, Carbamoyl oder Phthaloyl in Frage.

Als Diazokomponenten der allgemeinen Formel (V) sind folgende Verbindungen bevorzugt: 1-Amino-4-methoxybenzol-2-sulfonsäure, 1-Amino-4-methoxybenzol-3-sulfonsäure, 1-Amino-4-ethoxybenzol-2-sulfonsäure, 1-Amino-4-ethoxybenzol-3-sulfonsäure, 4-Aminodiphenylether-2-sulfonsäure, 1-Amino-4-methoxybenzol-2,5-disulfonsäure.

Die neuen Farbstoffe eignen sich zum Färben und Bedrucken von Hydroxyl- und Amidgruppen enthaltenden Materialien, wie Textilfasern, -fäden und -geweben aus Wolle, Seide und besonders zum Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

### Beispiel 1

23,9 g 2-Amino-5-hydroxynaphthalin-7-sulfonsäure werden in 175 ml Wasser bei 35° C mit etwa 20 ml 20 %iger Natronlauge gelöst. Anschließend wird durch Zugabe von ca. 7 ml 36 %iger Salzsäure ein pH-Wert von etwa 5,5 eingestellt. In die so erhaltene Suspension werden 15,1 g 4,6-Difluor-5-chlorpyrimidin bei 35° C langsam eingetropft. Nach vorübergehender Lösung fällt das hellgraue Acylierungsprodukt der Formel 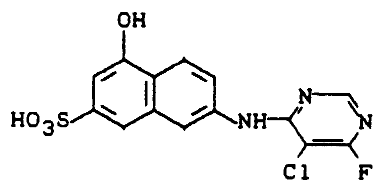
langsam aus. Während der Kondensation wird der pH-Wert mit verdünnter Sodalösung oder durch Zugabe von verdünnter LiOH bzw. Natronlauge bei 5,1 bis 5,3 gehalten.

In die so erhaltene Suspension wird die auf üblichem Wege erhaltene Suspension der Diazoniumverbindung aus 20,3 g 1-Amino-4-methoxybenzol-2-sulfonsäure in ca. 200 ml verdünnter Salzsäure unter Eiskühlung eingerührt. Durch Zugabe von Natrium- oder vorzugsweise Lithiumcarbonat wird ein pH-Wert von ca. 6,5 gehalten. Nach mehrstündigem Nachrühren wird der ausgefallene Farbstoff abgesaugt und im Vakuum bei ca. 50° C getrocknet. Der Farbstoff liegt dann als rotbraunes Pulver vor und färbt Baumwolle in scharlachfarbenen Tönen. Es besitzt folgende Konstitution:

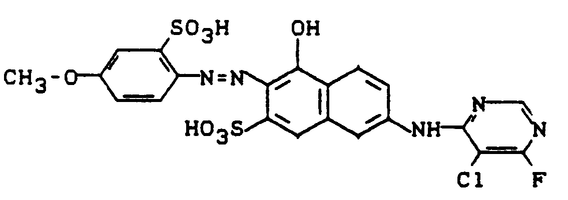

### Beispiel 2

53,3 g des Aminoazofarbstoffs der Formel 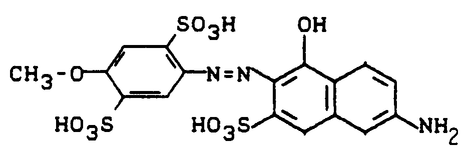
werden in 350 ml Wasser bei 70° C mit ca. 20 ml 20 %iger Natronlauge gelöst. In die so erhaltene Lösung gibt man bei 70° 16,6 g (0,11 Mol) 4,6-Difluor-5-chlorpyrimidin, wobei der pH-Wert mit Sodalösung zwischen 5,3 und 5,5 und die Temperatur bei 70° C gehalten wird. Nach ca. 3-4 Stunden ist die Kondensation beendet. Dann werden 250 ml Wasser zugegeben und bei 50° C mit 140 g Kochsalz der Farbstoff ausgeschieden. Der ausgefallene Farbstoff wird dann abgesaugt und im Vakuum bei ca. 50° C getrocknet. Das Produkt liegt dann als orangefarbenes Pulver vor, löst sich in Wasser mit gelbstichig roter Farbe und färbt Baumwolle in scharlachfarbenen Tönen.

Es besitzt folgende Konstitution:

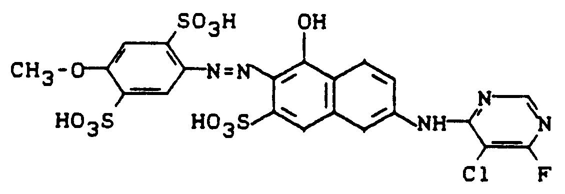

## Patentansprüche

1. Reaktivfarbstoffe der Formel 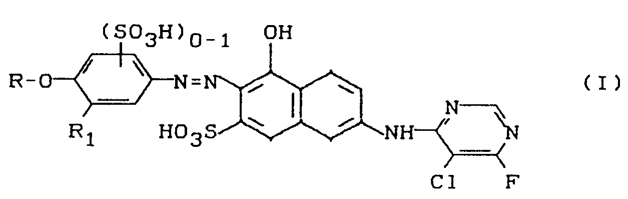 und deren Salze, worin
R = gegebenenfalls substituiertes C₁-C₅-Alkyl, Cyclohexyl oder Aryl, insbesondere gegebenenfalls substituiertes Phenyl,
R₁ = H, Sulfo, Halogen oder C₁-C₄-Alkyl.

2. Farbstoffe des Anspruchs 1 mit R = CH₃ und R₁ = SO₃H oder H.

## Claims

1. Reactive dyestuffs of the formula 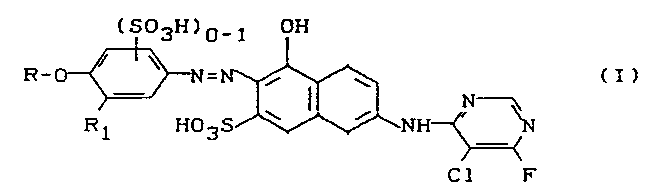 in which
R = optionally substituted C₁-C₅-alkyl, cyclohexyl or aryl, in particular optionally substituted phenyl,
R₁ = H, sulpho, halogen or C₁-C₄-alkyl, and salts thereof.

2. Dyestuffs according to Claim 1 where R = CH₃ and R₁ = SO₃H or H.

## Revendications

1. Colorants réactifs de formule 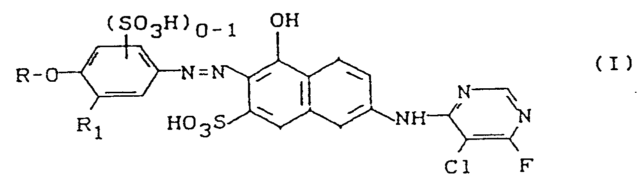 et leurs sels,
R représentant un coupe alkyle en C₁-C₅ éventuellement substitué, cyclohexyle ou aryle, en particulier phényle éventuellement substitué,
R₁ représentant H, un groupe sulfo, un halogène ou un groupe alkyle en C₁-C₄.

2. Colorants de la revendication 1, pour lesquels R = CH₃ et R₁ = SO₃H ou H.
